# EUROPÄISCHE PATENTSCHRIFT

(11) **EP 2 257 671 B1**
(45) Veröffentlichungstag und Bekanntmachung des Hinweises auf die Patenterteilung: **12.11.2014**
(21) Anmeldenummer: 09723012.2
(22) Anmeldetag: 12.03.2009
(51) Int. Cl.: D21H 17/22, D21H 19/50, C09D 5/00, C09H 9/04

(54) **VERWENDUNG VON GELATINEPARTIKELN IN PULVERBESCHICHTUNGSVERFAHREN**
USE OF GELATIN PARTICLES IN POWDERED COATING PROCESSES
UTILISATION DE PARTICULES DE GÉLATINE DANS DES PROCÉDÉS DE REVÊTEMENT PAR POUDRE

(30) Priorität: 20.03.2008 DE 102008015961
(43) Veröffentlichungstag der Anmeldung: 08.12.2010
(73) Patentinhaber: GELITA AG, 69412 Eberbach (DE)
(72) Erfinder: POERSCHKE, Ralf, 69151 Neckargemünd (DE)
(74) Vertreter: Hoeger, Stellrecht & Partner Patentanwälte
(86) Internationale Anmeldenummer: PCT/EP2009/052913
(87) Internationale Veröffentlichungsnummer: WO 2009/115446

(56) Entgegenhaltungen:
- EP-A- 0 279 682
- EP-A- 0 826 746
- WO-A-2004/101641
- GB-A- 895 327
- GB-A- 1 166 104
- JP-A- 58 194 810

## Beschreibung

Die vorliegende Erfindung betrifft die Verwendung von Gelatinepartikeln in einem Pulverbeschichtungsverfahren zur Herstellung von Beschichtungen oder Formkörpern auf Basis von Gelatine.

Die Herstellung von Beschichtungen aus Gelatine spielt in vielen technischen Bereichen eine wichtige Rolle. Insbesondere sind in diesem Zusammenhang die Lebensmittelindustrie, die pharmazeutische Industrie sowie die Herstellung von photographischen Filmen, Photopapier und Spezialpapier für Tintenstrahl-drucker (Inkjet-Papier) zu nennen. Durch die Auswahl der Rohstoffe und durch das jeweilige Herstellungsverfahren der Gelatine können deren Eigenschaften wie Gelstärke und Viskosität über einen relativ weiten Bereich variiert und so an die Anforderungen des jeweiligen Einsatzbereiches angepasst werden.

Die Herstellung der Gelatinebeschichtungen erfolgt üblicherweise dadurch, dass eine wässrige Lösung der Gelatine auf das zu beschichtende Substrat aufgebracht und unter Ausbildung der Beschichtung getrocknet wird. In der EP 0 279 682 A2 wird beispielsweise ein Verfahren aus dem pharmazeutischen Bereich beschrieben, bei dem Tabletten (so genannte Caplets) durch Eintauchen in eine Gelatinelösung mit einer Beschichtung überzogen werden. Auch die Beschichtung von Photopapieren und Inkjet-Papieren erfolgt bei den meisten Anwendungen durch die Verwendung von Gelatinelösungen (siehe z.B. R. Schrieber, H. Garreis: Gelatine Handbook, Verlag WILEY-VCH 2007, Seite 259 f.).

In analoger Weise können auch selbsttragende Formkörper aus Gelatine hergestellt werden, indem die getrocknete Gelatineschicht von dem Substrat abgelöst wird. Ein Beispiel hierfür ist die Herstellung von Gelatinehartkapseln durch Eintauchen eines Dorns in eine wässrige Gelatinelösung.

In einigen Fällen wäre es allerdings wünschenswert, anstelle des Einsatzes einer wässrigen Gelatinelösung die Beschichtung bzw. die Formkörper mittels eines Pulverbeschichtungsverfahrens herzustellen, bei dem ein Gelatinepulver (d.h. trockene Gelatinepartikel) auf die Oberfläche des Substrats aufgebracht und anschließend zu einer Beschichtung verschmolzen wird. Ein solches Verfahren hätte (insbesondere bei feuchtigkeitsempfindlichen Substraten) den Vorteil, dass das Substrat nur mit einer wesentlich geringeren Menge an Wasser in Berührung kommt, wodurch auch die für das Trocknen der Beschichtung benötigte Zeit deutlich verkürzt würde. Dies ist auch unter wirtschaftlichen Gesichtspunkten relevant, da die Trocknung einer wässrigen Gelatinelösung erhebliche Mengen an Energie benötigt. Ein weiterer Nachteil bei wässrigen Gelatinelösungen ist eine mögliche Veränderung der Gelatine bei längeren Lagerzeiten durch Hydrolyse, wodurch es schwierig sein kann, eine reproduzierbare Qualität der hergestellten Beschichtung sicherzustellen.

In der GB 1 166 104 wird ein Pulverbeschichtungsverfahren u.a. unter Verwendung von Gelatine beschrieben. Dabei wird ein Gelatinepulver auf eine Metalloberfläche aufgebracht und durch Einwirkung von Wasserdampf bei 100 °C zu einer kontinuierlichen Beschichtung verschmolzen (Seite 6, linke Spalte, Zeilen 45 bis 52 der GB 1 166 104). Die hierfür erforderliche Wasseraufnahme durch die Gelatine ist jedoch auch bei diesem Verfahren so hoch, dass eine anschließende Trocknungszeit der Beschichtung von mehr als 30 Minuten erforderlich ist.

Der vorliegenden Erfindung liegt die Aufgabe zugrunde, ein Pulverbeschichtungsverfahren mit Gelatine vorzuschlagen, bei dem die oben beschriebenen Nachteile vermieden werden.

Diese Aufgabe wird bei dem Pulverbeschichtungsverfahren der eingangs genannten Art erfindungsgemäß dadurch gelöst, dass Gelatinepartikel verwendet werden, die durch Trocknen einer wässrigen Gelatinelösung hergestellt sind, wobei die Gelatine vor oder während dem Trocknen keinen Gelzustand durchläuft.

Es wurde überraschenderweise festgestellt, dass die erfindungsgemäßen Gelatinepartikel, die ohne Durchlaufen eines Gelzustandes hergestellt sind, im Gegensatz zu herkömmlicher Gelatine wesentlich besser für die Verwendung in Pulverbeschichtungsverfahren geeignet sind. Der Grund hierfür liegt vermutlich darin, dass die Gelatine in diesen Partikeln in einer anderen Struktur, insbesondere in überwiegend amorpher Form, vorliegt.

Bei herkömmlicher Gelatine erfolgt die Herstellung in der Weise, dass eine durch Extraktion des kollagenhaltigen Rohmaterials gewonnene wässrige Gelatinelösung zunächst abgekühlt wird, wobei die Gelatine vom Zustand einer kolloidalen Lösung (Gelatinesol) unter teilweiser Renaturierung der natürlichen Kollagenstruktur in einen Gelzustand (Gelatinegel) übergeht. Dieses Gelatinegel, in dem die Gelatinemoleküle zumindest teilweise in einer kristallinen Struktur vorliegen, wird anschließend in Form von Bändern (zur Herstellung von Blattgelatine) oder Nudeln getrocknet. Letztere können dann zu Gelatinegranulat oder -pulver vermahlen werden.

Im Gegensatz hierzu zeichnen sich die erfindungsgemäßen Gelatinepartikel dadurch aus, dass der beschriebene Gelzustand beim Trocknungsvorgang gerade nicht durchlaufen wird, was durch eine möglichst rasche Trocknung der wässrigen Gelatinelösung, ohne dass diese abgekühlt wird, erreicht werden kann. Bevorzugte Trocknungsverfahren sind hierbei die Kontakthaftschichtzylindertrocknung, die Sprühtrocknung und die Wirbelschichttrocknung. Bei letzterem Verfahren wird die Gelatinelösung auf feste Keime aus Gelatine aufgesprüht, die dann zu größeren Partikeln anwachsen.

Durch diese Art der Trocknung und die dadurch bedingte unterschiedliche molekulare Struktur der Gelatine in den erfindungsgemäßen Gelatinepartikeln zeichnen sich diese durch eine relativ starke Abhängigkeit des Erweichungspunktes (Glasübergangstemperatur) vom Wassergehalt aus. Der Wassergehalt von getrockneter Gelatine beträgt in der Regel ca. 2 bis 15 Gew.-%. Bei der Durchführung des Pulverbeschichtungsverfahrens muss dieser Wassergehalt (in der Regel durch Einwirkung von Wasserdampf) erhöht werden, um die Erweichung und Verschmelzung der Gelatinepartikel zu einer Beschichtung zu ermöglichen. Im Vergleich zu herkömmlich getrockneter Gelatine ist jedoch bei den erfindungsgemäßen Gelatinepartikeln bereits eine geringere Temperatur und/oder eine geringere Wasseraufnahme ausreichend, um diese Erweichung zu bewirken. Somit kann die Ausbildung der Beschichtung unter milderen Bedingungen durchgeführt werden, und durch die geringere Wasseraufnahme verkürzt sich die im Anschluss erforderliche Trocknungszeit.

Die Größe der erfindungsgemäßen Gelatinepartikel kann über einen relativ weiten Bereich variieren, sie ist naturgemäß von der Art der Anwendung und insbesondere von der Schichtdicke der herzustellenden Beschichtung bzw. des herzustellenden Formkörpers abhängig. Insbesondere werden Gelatinepartikel verwendet, die einen mittleren Partikeldurchmesser von ca. 0,5 bis ca. 500 µm aufweisen, bevorzugt von ca. 5 bis ca. 250 µm, weiter bevorzugt von ca. 10 bis ca. 100 µm. Möglichst kleine Partikel sind häufig wünschenswert, um eine möglichst homogene Beschichtung zu erhalten.

In Abhängigkeit von der zur Herstellung der Partikel eingesetzten Trocknungsmethode können diese bereits unmittelbar in der gewünschten Größenordnung anfallen (z.B. bei der Sprühtrocknung). In anderen Fällen (z.B. bei der Kontakthaftschichtzylindertrocknung) muss die Partikelgröße im Anschluss noch durch Mahlen und/oder Aussieben der Gelatinepartikel reduziert werden.

Die erfindungsgemäßen Gelatinepartikel bestehen bevorzugt zu einem überwiegenden Anteil aus Gelatine, sie können jedoch weitere Stoffe als Additive enthalten, ohne dass dadurch die oben beschriebenen vorteilhaften Eigenschaften in Bezug auf das Pulverbeschichtungsverfahren verloren gingen. Bevorzugt enthalten die erfindungsgemäßen Gelatinepartikel mehr als ca. 60 Gew.-% Gelatine, weiter bevorzugt mehr als ca. 80 Gew.-%, am meisten bevorzugt mehr als ca. 95 Gew.-%, jeweils bezogen auf die Trockenmasse.

Gemäß einer bevorzugten Ausführungsform der Erfindung enthalten die Gelatinepartikel ferner einen Weichmacher. Hierdurch kann die Flexibilität der hergestellten Beschichtungen bzw. Formkörper erhöht werden, was in vielen Fällen, z.B. bei der Beschichtung von Papier oder bei der Herstellung von Gelatinekapseln, wünschenswert ist. Bevorzugte Weichmacher umfassen z.B. Alkylenglykol-mono-C₁-C₆-Alkylether, Glycerin, Polyalkohole, Ethylenglykole, Propylenglykole, Polyethylenglykole, ethoxylierte oder propoxylierte Ethylen-oder Propylenglykolester oder -glycerinester, Glycerintriacetat, acetylierte Monoglyceride, Triethylcitrat, Tributylcitrat, Acetyltriethylcitrat, Acetyltributylcitrat, Diethylphthalat, Glycerincarbonat, Propylencarbonat sowie deren Mischungen.

Die erfindungsgemäßen Gelatinepartikel können verschiedene weitere Additive enthalten, um die Oberflächeneigenschaften der hergestellten Beschichtung bzw. Formkörper, z.B. deren Glanz und Haptik, zu beeinflussen. Als solche Additive sind in erster Linie oberflächenaktive Substanzen, insbesondere nichtionische Tenside (z.B. Triton-X-100), anionische Tenside (z.B. Alkylsulfate) oder auch kationische Tenside zu nennen. Weitere mögliche Additive sind anorganische Füllstoffe (z.B. Aluminiumoxid, Titandioxid oder amorphes Siliciumdioxid) und/oder organische Füllstoffe (insbesondere Mono-, Di-, Oligo-und Polysaccharide oder deren Derivate, z.B. Isomalt, Inulin, Stärke, mikrokristalline Zellulose und Zellulosederivate).

Das Einbringen der Additive in die Gelatinepartikel erfolgt vorzugsweise durch eine Zugabe zu der wässrigen Gelatinelösung vor deren Trocknen zur Herstellung der Partikel.

Das Pulverbeschichtungsverfahren, in dem die Gelatinepartikel gemäß der Erfindung eingesetzt werden, umfasst vorzugsweise die folgenden Schritte:
a) Aufbringen der Gelatinepartikel auf ein Substrat;
b) Einwirken von Feuchtigkeit und gegebenenfalls Wärme auf die Gelatinepartikel, um diese unter Ausbildung einer Beschichtung oder eines Formkörpers zu verschmelzen;
c) Trocknen der Beschichtung oder des Formkörpers; und
d) gegebenenfalls entfernen des Formkörpers von dem Substrat.

Das Aufbringen der Gelatinepartikel gemäß Schritt a) erfolgt bevorzugt mittels Aufsprühen, insbesondere mit Hilfe eines Luftstroms, wie dies in Bezug auf Pulverbeschichtungsverfahren allgemein bekannt ist. Weiter bevorzugt werden die Gelatinepartikel hierbei elektrostatisch aufgeladen, wodurch eine gute Haftung und gleichmäßige Verteilung der Partikel auf der Oberfläche des Substrats wesentlich begünstigt wird.

Das Einwirken von Feuchtigkeit und gegebenenfalls Wärme auf die Gelatinepartikel gemäß Schritt b) kann aufgrund von deren besonderen Eigenschaften bei relativ milden Bedingungen durchgeführt werden. Dies ist insbesondere bei empfindlichen Substraten von Vorteil und führt durch die relativ geringe Wasseraufnahme durch die Gelatinepartikel zu einer Verkürzung der erforderlichen Trocknungszeit der Beschichtung bzw. des Formkörpers.

Vorzugsweise umfasst Schritt b) das Einwirken von Wasserdampf auf die Gelatinepartikel. Die zum Verschmelzen der Partikel erforderlichen Bedingungen können dabei, in Abhängigkeit z.B. von der Größe und Zusammensetzung der Partikel, insbesondere über die Temperatur sowie die Einwirkzeit des Wasserdampfs variiert werden. Bevorzugt sind hierbei Temperaturen von ca. 60 bis ca. 100 °C sowie Einwirkzeiten von ca. 3 bis ca. 60 Sekunden.

Bei der gemäß Schritt b) gebildeten Beschichtung handelt es sich bevorzugt um eine durchgehende, d.h. geschlossene Beschichtung des Substrates. Alternativ ist es jedoch auch möglich, durch das Aufbringen entsprechend geringer Mengen an Gelatinepartikeln lediglich eine unvollständige, d.h. insbesondere eine bereichsweise oder offenporige Beschichtung des Substrates zu erzeugen.

Das Trocknen der Beschichtung oder des Formkörpers gemäß Schritt c) kann ebenfalls bei milden Bedingungen, insbesondere bei Raumtemperatur, erfolgen. Wie oben dargelegt, können aufgrund der geringeren Wasseraufnahme kürzere Trocknungszeiten im Vergleich zu Pulverbeschichtungen mit herkömmlicher Gelatine realisiert werden.

Im Falle der Herstellung eines Formkörpers wird dieser gemäß Schritt d) von dem Substrat (in diesem Fall z.B. einem Dorn) entfernt.

Ein Aspekt der Erfindung betrifft die Verwendung der erfindungsgemäßen Gelatinepartikel, wie vorstehend beschrieben, zum Beschichten von pharmazeutischen Präparaten. Hierbei handelt es sich insbesondere um Tabletten, Filmtabletten bzw. Caplets, die mit einer Beschichtung aus Gelatine überzogen werden.

Ein weiterer Aspekt der Erfindung betrifft die Verwendung der erfindungsgemäßen Gelatinepartikel zur Herstellung von Gelatinekapseln, insbesondere Gelatinehartkapseln. Hierbei werden jeweils einzelne Kapselhälften durch die Beschichtung eines Dorns gemäß dem obigen Verfahren hergestellt und dann mit einem pharmazeutischen Wirkstoff befüllt.

Ein anderer Aspekt der vorliegenden Erfindung betrifft die Verwendung der erfindungsgemäßen Gelatinepartikel zum Beschichten von Papier. Insbesondere betrifft dies die Beschichtung von Photopapier und Inkjet-Papier.

Diese und weitere Vorteile der Erfindung werden anhand der nachfolgenden Beispiele näher erläutert, die den Gegenstand der Erfindung jedoch in keiner Weise einschränken sollen.

### Beispiel 1: Herstellung von Gelatinepartikeln durch Kontakthaftschichtzylindertrocknung

Erfindungsgemäße Gelatinepartikel können mit dem im Folgenden beschriebenen Verfahren der Kontakthaftschichtzylindertrocknung ausgehend von einer wässrigen Gelatinelösung hergestellt werden.

Hierbei wird eine Gelatinelösung (z.B. Schweineschwartengelatine mit 210 g Bloom) mit einer Konzentration von 25 bis 50 Gew.-% auf 50 bis 70 °C erwärmt und auf das Auftragswerk eines Kontakthaftschichtzylindertrockners (Zylindertemperatur ca. 130 °C) gegeben.

Die bei der Trocknung anfallenden Gelatineflakes (Wassergehalt ca. 2 bis 10 Gew.-%) wurden mittels einer Stiftmühle zu Partikeln vermahlen. Auf diese Weise wurden Gelatinepartikel mit einem mittleren Partikeldurchmesser von ca. 67 µm (gemessen durch Lichtstreuung) erhalten.

### Beispiel 2: Beschichtung von Inkjet-Papier

Die gemäß Beispiel 1 hergestellten Gelatinepartikel wurden für die Beschichtung eines polyethylenbeschichteten Papiers mit einem Flächengewicht von ca. 160 g/m² eingesetzt. Solche PE-beschichtete, nicht-saugende Papiere kommen insbesondere als Inkjet-Papier zur Anwendung.

Die Pulverbeschichtung wurde mittels einer Pulverlackhandanlage der Firma Wagner (BRAVO Airfluid) durchgeführt. Die Gelatinepartikel wurden mittels einer Pistole negativ aufgeladen und bei ca. 20 °C während ca. 3 bis 5 Sekunden auf die Papieroberfläche gesprüht. Dabei wurden Mengen an Gelatinepartikeln von 16,3 bis 33 g/m² auf das Substrat aufgebracht.

Anschließend wurde das mit den Gelatinepartikeln belegte Papier der Einwirkung von gesättigtem Wasserdampf (bei 100 °C und Normaldruck) während einem Zeitraum von 10 bis 15 Sekunden ausgesetzt, um die Gelatinepartikel miteinander zu verschmelzen.

Die beschichteten Papierbögen wurden anschließend auf eine Temperatur von ca. 20 °C abgekühlt und getrocknet, wobei die Beschichtung bereits nach ca. 20 Minuten trocken und nicht mehr klebrig war.

### Beispiel 3: Vergleich zu herkömmlicher Gelatine

Um einen direkten, quantitativen Vergleich zu ermöglichen, wurde eine Pulverbeschichtung einer Glasoberfläche sowohl mit den erfindungsgemäßen Gelatinepartikeln gemäß Beispiel 1 (Kontakthaftschichtzylindertrocknung) als auch mit einer herkömmlich getrockneten Gelatine durchgeführt. Bei Letzterer handelte es sich um Gelatinepartikel aus Schweineschwartengelatine, die auf herkömmliche Weise durch Trocknung und Mahlung eines Gelatinegels und Absieben auf einen mittleren Partikeldurchmesser von ca. 73 µm hergestellt wurden.

Nach dem Aufbringen der Partikel auf die Glasoberflächen in einer Menge von jeweils ca. 100 g/m² wurden beide Proben mit gesättigtem Wasserdampf (bei 100 °C und Normaldruck) beaufschlagt. Dabei wurde die Zeit gemessen, nach der die Partikel vollständig zu einer durchgehenden Beschichtung verschmolzen waren, was daran zu erkennen war, dass die Beschichtung transparent wurde.

Während dies bei den erfindungsgemäßen Gelatinepartikeln nach 30 Sekunden der Fall war, wurde bei den auf herkömmliche Weise getrockneten Gelatinepartikeln eine Einwirkzeit von 42 Sekunden benötigt. Des Weiteren zeigte sich, dass die erfindungsgemäßen Partikel nach dieser Zeit eine Menge von ca. 76% ihrer Masse an Wasser aufgenommen hatten, während die Wasseraufnahme bei den herkömmlich getrockneten Partikeln ca. 104% ihrer Masse betrug.

Es ist anzumerken, dass durch ein Vorwärmen des mit den Partikeln belegten Substrates die benötigte Einwirkzeit des Wasserdampfes noch verringert werden könnte. Hierauf wurde bei dem Versuch bewusst verzichtet (die Glasoberflächen hatten eine Temperatur von ca. 17 bis 20 °C), damit das Verschmelzen der Partikel insgesamt langsamer ablief und gut beobachtet werden konnte.

Der Versuch zeigt, dass durch die Verwendung der erfindungsgemäßen Gelatinepartikel die Ausbildung einer durchgehenden Beschichtung schneller und mit einer geringeren Wasseraufnahme, d.h. bei milderen Bedingungen, erfolgt. Durch die geringere Wasseraufnahme verringert sich dementsprechend auch der Zeit- und Energiebedarf bei der nachfolgenden Trocknung der Beschichtung.

### Beispiel 4: Herstellung von Gelatinepartikeln durch Sprühtrocknung

Dieses Beispiel beschreibt ein alternatives Herstellungsverfahren von erfindungsgemäßen Gelatinepartikeln mittels Sprühtrocknung ausgehend von einer wässrigen Gelatinelösung.

Zur Herstellung der Lösung wurden 250 g Schweineschwartengelatine (246 g Bloom, 10,7 Gew.-% Wassergehalt) in 2,4 l kaltem Wasser für ca. 30 Minuten gequollen und anschließend im Wasserbad bei ca. 60 °C gelöst. Der Lösung wurden 13 g einer ca. 87 Gew.-%igen wässrigen Glycerinlösung als Weichmacher zugegeben.

Die Gelatinelösung (Konzentration ca. 9 Gew.-%) wurde mit Hilfe eines Labor-Sprühtrockners der Firma Büchi (190 Spray-Dryer) getrocknet bei einem Zulauf von ca. 0,5 l/h, einer Zulufttemperatur von 195 °C und mit ca. 700 l/h Druckluft, wobei der Aspirator auf Stufe 5 lief. Dabei stellte sich eine Ablufttemperatur von ca. 96 °C ein.

Auf diese Weise wurde bei einem Durchsatz von ca. 30 g/h ein Pulver von erfindungsgemäßen Gelatinepartikeln mit einem Wassergehalt von ca. 5 Gew.-% erhalten.

Die so hergestellten Gelatinepartikel wiesen einen mittleren Partikeldurchmesser von weniger als ca. 40 µm auf.

### Beispiel 5: Beschichtung von saugendem Papier

In diesem Beispiel wurden Papierbögen mit einer saugenden Oberfläche und einem Flächengewicht von 250 g/m² (Firma Schöller & Söhne) mit den gemäß Beispiel 4 hergestellten Gelatinepartikeln (Sprühtrocknung) beschichtet. Die Pulverbeschichtung wurde durchgeführt wie in Beispiel 2 beschrieben, jedoch mit einer geringeren Menge an Gelatinepartikeln von ca. 2 g/m².

Die erforderliche Trocknungszeit, um eine nicht mehr klebrige, seidenmatte Oberfläche der Papierbögen zu erzielen, betrug in diesem Fall ca. 10 Minuten.

## Patentansprüche

1. Verwendung von Gelatinepartikeln in einem Pulverbeschichtungsverfahren zur Herstellung von Beschichtungen oder Formkörpern auf Basis von Gelatine, **dadurch gekennzeichnet, dass** die Gelatinepartikel durch Trocknen einer wässrigen Gelatinelösung hergestellt sind, wobei die Gelatine vor oder während dem Trocknen keinen Gelzustand durchläuft.

2. Verwendung nach Anspruch 1, wobei die Gelatine in den Gelatinepartikeln in überwiegend amorpher Form vorliegt.

3. Verwendung nach Anspruch 1 oder 2, wobei die Gelatinepartikel durch Kontakthaftschichtzylindertrocknung, Sprühtrocknung oder Wirbelschichttrocknung hergestellt sind.

4. Verwendung nach einem der vorangehenden Ansprüche, wobei die Gelatinepartikel einen mittleren Partikeldurchmesser von ca. 0,5 bis ca. 500 µm, bevorzugt ca. 5 bis ca. 250 µm, weiter bevorzugt ca. 10 bis ca. 100 µm aufweisen.

5. Verwendung nach einem der vorangehenden Ansprüche, wobei die Gelatinepartikel mehr als ca. 60 Gew.% Gelatine, bevorzugt mehr als ca. 80 Gew.% Gelatine, weiter bevorzugt mehr als ca. 95 Gew.% Gelatine, jeweils bezogen auf die Trockenmasse, enthalten.

6. Verwendung nach einem der vorangehenden Ansprüche, wobei die Gelatinepartikel ferner einen Weichmacher und/oder eine oberflächenaktive Substanz und/oder einen anorganischen Füllstoff und/oder einen organischen Füllstoff enthalten.

7. Verwendung nach einem der vorangehenden Ansprüche in einem Pulverbeschichtungsverfahren, welches folgende Schritte umfasst:
a) Aufbringen der Gelatinepartikel auf ein Substrat;
b) Einwirken von Feuchtigkeit und gegebenenfalls Wärme auf die Gelatinepartikel, um diese unter Ausbildung einer Beschichtung oder eines Formkörpers zu verschmelzen;
c) Trocknen der Beschichtung oder des Formkörpers; und
d) gegebenenfalls entfernen des Formkörpers von dem Substrat.

8. Verwendung nach Anspruch 7, wobei Schritt a) mittels Aufsprühen der Gelatinepartikel erfolgt.

9. Verwendung nach Anspruch 7 oder 8, wobei die Gelatinepartikel zur Durchführung von Schritt a) elektrostatisch aufgeladen werden.

10. Verwendung nach einem der Ansprüche 7 bis 9, wobei Schritt b) das Einwirken von Wasserdampf auf die Gelatinepartikel umfasst, insbesondere bei einer Temperatur von ca. 60 °C bis ca. 100 °C.

11. Verwendung nach Anspruch 10, wobei der Wasserdampf ca. 3 bis ca. 60 Sekunden auf die Gelatinepartikel einwirkt.

12. Verwendung nach einem der Ansprüche 7 bis 17 zum Beschichten von pharmazeutischen Präparaten.

13. Verwendung nach einem der Ansprüche 7 bis 11 zur Herstellung von Gelatinekapseln.

14. Verwendung nach einem der Ansprüche 7 bis 11 zum Beschichten von Papier.

## Claims

1. Use of gelatin particles in a powder coating process for the production of coatings or shaped bodies based on gelatin, **characterised in that** the gelatin particles are produced by drying an aqueous gelatin solution, wherein the gelatin does not pass through a gel state before or during the drying.

2. Use according to claim 1, wherein the gelatin is present in the gelatin particles in a predominantly amorphous form.

3. Use according to claim 1 or 2, wherein the gelatin particles are produced by contact adhesive layer cylinder drying, spray drying or fluidised bed drying.

4. Use according to one of the preceding claims, wherein the gelatin particles have an average particle diameter of approximately 0.5 to approximately 500 µm, preferably approximately 5 to approximately 250 µm, further preferred approximately 10 to approximately 100 µm.

5. Use according to one of the preceding claims, wherein the gelatin particles contain more than approximately 60% by weight of gelatin, preferably more than approximately 80% by weight of gelatin, further preferred more than approximately 95% by weight of gelatin, in relation to the dry weight in each case.

6. Use according to one of the preceding claims, wherein the gelatin particles additionally contain a softener, and/or a surface-active substance, and/or an inorganic filler, and/or organic filler.

7. Use according to one of the preceding claims in a powder coating process, which comprises the following steps:
a) applying the gelatin particles to a substrate;
b) subjecting the gelatin particles to the action of moisture and optionally heat in order to fuse them to form a coating or a shaped body;
c) drying the coating or the shaped body; and
d) optionally, removing the shaped body from the substrate.

8. Use according to claim 7, wherein step a) is conducted by spraying the gelatin particles.

9. Use according to claim 7 or 8, wherein the gelatin particles are electrostatically charged to conduct step a).

10. Use according to one of claims 7 to 9, wherein step b) comprises the action of water vapour on the gelatin particles, in particular at a temperature of approximately 60°C to approximately 100°C.

11. Use according to claim 10, wherein the water vapour acts on the gelatin particles for approximately 3 to approximately 60 seconds.

12. Use according to one of claims 7 to 11 for coating pharmaceutical preparations.

13. Use according to one of claims 7 to 11 for the production of gelatin capsules.

14. Use according to one of claims 7 to 11 for coating paper.

## Revendications

1. Utilisation de particules de gélatine dans un procédé de revêtement par poudre en vue de la production de revêtements ou de corps moulés à base de gélatine, **caractérisée en ce que** les particules de gélatine sont produites par séchage d'une solution aqueuse de gélatine, la gélatine ne traversant pas un état de gel avant ou pendant le séchage.

2. Utilisation selon la revendication 1, dans laquelle la gélatine se présente dans les particules de gélatine sous une forme principalement amorphe.

3. Utilisation selon la revendication 1 ou 2, dans laquelle les particules de gélatine sont produites par séchage sur cylindre en couche de contact, séchage par pulvérisation ou séchage en couche fluidisée.

4. Utilisation selon l'une quelconque des revendications précédentes, dans laquelle les particules de gélatine présentent un diamètre moyen d'environ 0,5 à environ 500 µm, de préférence d'environ 5 à environ 250 µm, et de préférence encore d'environ 10 à environ 100 µm.

5. Utilisation selon l'une quelconque des revendications précédentes, dans laquelle les particules de gélatine contiennent plus d'environ 60 % en poids de gélatine, de préférence plus d'environ 80 % en poids de gélatine, et de préférence encore plus d'environ 95 % en poids de gélatine, chaque fois rapportés à la masse sèche.

6. Utilisation selon l'une quelconque des revendications précédentes, dans laquelle les particules de gélatine contiennent en outre un plastifiant et/ou une substance tensioactive et/ou une matière de charge inorganique et/ou une matière de charge organique.

7. Utilisation selon l'une quelconque des revendications précédentes, dans un procédé de revêtement par poudre, qui comprend les étapes suivantes :
a) dépôt des particules de gélatine sur un substrat ;
b) action de l'humidité et éventuellement de la chaleur sur les particules de gélatine, afin de fondre celles-ci avec formation d'un revêtement ou d'un corps moulé ;
c) séchage du revêtement ou du corps moulé ; et
d) éventuellement, enlèvement du corps moulé du substrat.

8. Utilisation selon la revendication 7, dans laquelle l'étape a) est effectuée au moyen d'une pulvérisation de particules de gélatine.

9. Utilisation selon la revendication 7 ou 8, dans laquelle les particules de gélatine sont dotées d'une charge électrostatique pour l'exécution de l'étape a).

10. Utilisation selon l'une quelconque des revendications 7 à 9, dans laquelle l'étape b) comprend l'action de vapeur d'eau sur les particules de gélatine, en particulier à une température d'environ 60°C à environ 100°C.

11. Utilisation selon la revendication 10, dans laquelle la vapeur d'eau agit pendant environ 3 à environ 60 secondes sur les particules de gélatine.

12. Utilisation selon l'une quelconque des revendications 7 à 11 pour le revêtement de préparations pharmaceutiques.

13. Utilisation selon l'une quelconque des revendications 7 à 11 pour la production de capsules de gélatine.

14. Utilisation selon l'une quelconque des revendications 7 à 11 pour le revêtement de papier.
